# EUROPÄISCHE PATENTSCHRIFT

(11) **EP 3 864 242 B1**
(45) Veröffentlichungstag und Bekanntmachung des Hinweises auf die Patenterteilung: **05.06.2024**
(21) Anmeldenummer: 19790173.9
(22) Anmeldetag: 15.10.2019
(51) Int. Cl.: E05B 85/10, E05B 81/78

(54) **FAHRZEUGTÜRGRIFF**
VEHICLE DOOR HANDLE
POIGNÉE DE PORTIÈRE DE VÉHICULE

(30) Priorität: 08.01.2019 DE 102019100319
(43) Veröffentlichungstag der Anmeldung: 18.08.2021
(60) Teilanmeldung: 23194190.7
(73) Patentinhaber: Huf Hülsbeck & Fürst GmbH & Co. KG, 42551 Velbert (DE)
(72) Erfinder: VELICANIN, Mensur, 42549 Velbert (DE); THEIDEL, Michael, 45481 Mülheim (DE)
(74) Vertreter: Zenz Patentanwälte Partnerschaft mbB
(86) Internationale Anmeldenummer: PCT/EP2019/077986
(87) Internationale Veröffentlichungsnummer: WO 2020/143937

(56) Entgegenhaltungen:
- WO-A1-2014/049026
- FR-A1- 2 744 754
- US-A1- 2013 127 185
- US-A1- 2014 047 773

## Beschreibung

Die Erfindung betrifft ein Fahrzeugtürgriff für Kraftfahrzeuge. Insbesondere betrifft die Erfindung einen Fahrzeugtürgriff mit einer Handhabe zur sensorgesteuerten Auslösung einer Fahrzeugfunktion.

Kraftfahrzeuge, insbesondere Automobile, verfügen über unterschiedliche Arten von äußeren Fahrzeugtürgriffen zum Öffnen, Schließen und allgemeiner Handhabung von Fahrzeugtüren und Klappen. Bei herkömmlichen Fahrzeugtürgriffen im Bereich der Außenhaut eines Fahrzeuges ist meist ein Handhabenbereich über einem rückspringenden Bereich in der Außenhaut angeordnet, um für die Hand des Benutzers einen Zugriffsbereich zum Hintergreifen der Handhabe zu bieten. Die für einen Benutzer umgreifbare Handhabe ist mit einem am Fahrzeug festlegbaren und montierbaren Griffgehäuse gekoppelt. Das Griffgehäuse kann in Gestalt eines Trägers ausgebildet sein, der auf der Innenseite eines Türbleches montiert wird, um eine feste Halterung für die Handhabe zu bieten.

Es gibt mechanisch betätigte Fahrzeugtürgriffe, welche eine Lageänderung bei Betätigung über eine mechanische Wirkkette in eine Schlossbetätigung übertragen. Außerdem gibt es elektronische Fahrzeugtürgriffe (eLatch) mit Sensoren, um Betätigungen durch einen Benutzer in elektrische Signale umzusetzen und eine Türentriegelung unter elektronischer Weiterleitung von Betätigungssignalen vorzunehmen.

Die häufige Gestaltung von Fahrzeugtürgriffen, verwendet Handhaben, die jederzeit aus der Außenhaut des Fahrzeuges herausragen. Es gibt aber auch Fahrzeugtürgriffe, die in unterschiedlichen funktionellen Positionen an der Fahrzeugtür angeordnet sein können. Diese Fahrzeugtürgriffe können in einem Ruhezustand gegenüber der Außenhaut des Fahrzeuges zurückgezogen platziert sein, so dass sie fluchtend mit der Oberfläche der Tür abschließen und nur im Bedarfsfall gegenüber der Außenhaut bzw. dem Türblech ausgestellt werden, um den Benutzer einen Zugriff zu erlauben. Dies erfüllt einerseits Ansprüche an ästhetische Wirkungen, andererseits sind auch technische Effekte, insbesondere aerodynamische Verbesserungen und Reduzierungen der Windgeräusche durch Fahrzeugtürgriffe möglich, da diese bei Nichtbenutzung in die Fahrzeughaut zurückgezogen werden und mit dieser strakbündig abschließen.

Derartige ausfahrbare oder einziehbare Fahrzeugtürgriffe verfügen über Kopplungsmittel und einen Motor, wobei der Motor an dem Griffgehäuse hinter der Türhaut oder an einer anderen Position am Fahrzeug angeordnet ist. Die Kopplungsmittel wirken derart zwischen Handhabe und Motor, dass die Handhabe unter Antrieb des Motors gegenüber dem Griffgehäuse zwischen einer Ruhestellung und einer ausgestellten Betätigungsstellung verfahrbar ist. In der Ruhestellung ist der Fahrzeugtürgriff in die Fahrzeughaut zurückgezogen und eine Deckfläche der Handhabe, die nach außen gerichtet ist, schließt strakbündig mit einer Deckfläche der angrenzenden Karosserieabschnitte an.

Ein derartiger Fahrzeugtürgriff ist beispielsweise aus der WO 2014/049026 A1 bekannt. Die Handhabe von derartigen Fahrzeugtürgriffen kann mit Sensorkomponenten ausgestattet sein, die auf die Handhabe einwirkende Betätigungskräfte in der ausgefahrenen Bedienstellung erfassen und abgeleitet Betätigungssignale bereitstellen, wobei dazu eine dem Griffgehäuse zugeordnete kabelgebundene Schnittstelle vorgesehen ist, über welche die Betätigungssignale an ein fahrzeugseitiges Steuersystem ausgebbar sind. Eine derartige kabelgefundene Schnittstelle erlaubt einen Anschluss am Kabelbaum und Steuersystem des Fahrzeuges. Außerdem können in der Handhabe Kommunikationsmittel vorgesehen sein, welche ein an die Handhabe angenähertes mobiles Kommunikationsgerät erfassen und aus einer zwischen Kommunikationsmittel und Kommunikationsgerät etablierten Kommunikation abgeleitete Betätigungssignale bereitstellen können. Beispielsweise sind Fahrzeugtürgriffe bekannt, welche eine drahtlose Nahfeldschnittstelle (z.B. NFC-Schnittstelle) bereitstellen. Nähert sich ein Benutzer mit einem mobilen Kommunikationsgerät an, welches diesen Kommunikationsstandard beherrscht, können über die Kommunikationsmittel in der Handhabe Daten ausgetauscht werden, die beispielsweise die Legitimität eines Zugriffswunsches bestätigen, so dass das mobile Kommunikationsgerät als Fahrzeugschlüssel eingesetzt werden kann.

Aufgrund der zahlreichen Freiheitsgrade derartiger Systeme sind die Gestaltungen versenkbarer Fahrzeugtürgriffe aufwendig und kostenintensiv.

Das Dokument US 2013/127185 A1 beschreibt eine Griffanordnung mit einem Haltegriff. Der Haltegriff ist in einer normalen Richtung relativ zu einer äußeren Plattenoberfläche der Verschlussanordnung zwischen einer eingezogenen Position und einer ausgefahrenen Position beweglich. In der eingefahrenen Position ist eine Außenfläche des Griffs annähernd bündig mit der Außenfläche der Platte angeordnet. Die Verschlussbaugruppe umfasst einen Positionssensor, der so konfiguriert ist, dass er die Anwesenheit einer Bedienperson erkennt und der Griffbaugruppe signalisiert, den Haltegriff in die ausgefahrene Position zu bewegen, wenn die Anwesenheit der Bedienperson erkannt wird. Wenn der Haltegriff ergriffen wird, signalisiert die Griffbaugruppe einem Verriegelungsmechanismus, sich in eine entriegelte Position zu bewegen, damit die Verschlussbaugruppe geöffnet werden kann.

Aus der US 2014/047773 A1 ist eine Griffanordnung für eine Fahrzeugtür mit Gehäuse und Haltegriff bekannt. Der Haltegriff ist entlang eines Weges zwischen einer eingezogenen Position und einer ausgefahrenen Position beweglich. An dem Gehäuse ist ein Motor angebracht, der einen um eine Drehachse drehbaren Abtrieb aufweist. Ein Mechanismus verbindet den Abtrieb des Motors und den Haltegriff miteinander und überträgt die Drehbewegung des Abtriebs in die lineare Bewegung des Haltegriffs, um den Haltegriff zwischen der ausgefahrenen Position und der eingefahrenen Position zu bewegen.

Der Erfindung liegt daher die Aufgabe zugrunde, eine robustere und günstigere Variante für versenkbare Fahrzeugtürgriffe zur Verfügung zu stellen.

Die Aufgabe wird durch einen Fahrzeugtürgriff mit den Merkmalen des Patentanspruches 1 gelöst.

Der erfindungsgemäße Fahrzeugtürgriff zeichnet sich dadurch aus, dass die Handhabe sowohl in der Betätigungsstellung als auch in der Ruhestellung über ihre gesamte Erstreckung lagefest und stellwegfrei mit dem Gehäuse gekoppelt und gegenüber Auslenkung bezüglich des Griffgehäuses arretiert ist.

Im Gegensatz zu Fahrzeugtürgriffen, die in der Ruhestellung oder der Betätigungsstellung eine Lageveränderung der Handhabe durch den Benutzer erlauben oder erfordern, um Betätigungen zu erkennen, ist erfindungsgemäß zwar die Verstellbarkeit der Handhabe zwischen den beiden Stellungen vorgesehen, ohne jedoch in den Stellungen selbst Lageveränderungen der Handhabe gegenüber dem Griffgehäuse vorzusehen. Dies bedeutet, dass zur Betätigung des erfindungsgemäßen Fahrzeugtürgriffes kein Verschwenken, Kippen oder translatorisches Bewegen der Handhabe des Fahrzeugtürgriffes vorgesehen ist. Stattdessen werden ausschließlich elektronische Komponenten genutzt, die in der Handhabe vorgesehen sind, um Betätigungskräfte auf die Handhabe zu erfassen oder Datenkommunikationen zur Betätigungserkennung zu nutzen.

Unter einer Arretierung der Handhabe gegenüber Auslenkungen ist in diesem Zusammenhang zu verstehen, dass keine mechanische Stellwege vorgesehen sind, um eine Betätigung der Handhabe in der Ruhestellung oder der Betätigungsstellung zu erlauben. Die Handhabe ist sowohl in der Ruhestellung als auch der Betätigungsstellung jeweils derart festgelegt, dass die Betätigungskräfte nicht zu einer Betätigungsbewegung gegenüber dem Griffgehäuse führen. Dabei ist die Arretierung so auszuführen, dass sie die Lagefestigkeit der Handhabe lediglich bei üblichen Zugriffskräften eines Benutzers gewährleistet.

Die Handhabe kann in beliebiger Gestaltung ausgeführt sein, insbesondere als bügelartige Handhabe oder in Gestalt einer ausfahrenden oder ausklappenden einseitig freitragenden Schwinge. Es ist jedoch in jedem Fall vorgesehen, dass die Handhabe in ihrer äußeren Deckflächengestaltung strakbündig mit der umliegenden Karosseriehaut abschließt, sofern sich die Handhabe in der Ruhestellung befindet.

Die in der Handhabe anzuordnenden Sensorkomponenten zur Erfassung von einwirkenden Betätigungskräften können sämtliche Arten von Sensoren aufweisen, die bei Fahrzeugtürgriffen bekannt sind, insbesondere kapazitive Sensoren oder induktive Sensoren oder auch mechanische Schaltmittel mit Mikroschaltern und Schaltwippen oder Pistolengriffen. Ebenso kommen auch Piezoelemente in Betracht, welche Krafteinwirkungen auf die Handhabe erfassen.

Erfindungsgemäß weist der Fahrzeugtürgriff ansteuerbare Blockiermittel auf, welche die Handhabe in der Ruhestellung und/oder der Betätigungsstellung verriegeln und lagefest halten. Zusätzlich zu dem motorischen Antrieb ist gemäß dieser Ausführungsform vorgesehen, dass mechanische Verriegelungselemente die Lage der Handbabe in der Ruhestellung und/oder der Betätigungsstellung sichern. Dies können beispielsweise Verriegelungsstifte oder aufhebbare Rastmittel sein, die in den Bewegungsweg zwischen der Ruhestellung und der Betätigungsstellung der Handhabe gelangen, sobald sie angesteuert werden. Für eine Bewegung der Handhabe aus einer der Stellungen in die jeweils andere kann unter Ansteuerung der Blockiermittel die Sperrwirkung aufgehoben werden, die Lageänderung wird durchgeführt und ggf. werden die Sperrmittel in der anderen Stellung wieder aktiviert, um die Lage der Handhabe wiederum zu sichern. Es können dabei dieselben Sperrmittel für jede der beiden Stellungen verwendet werden oder unterschiedliche Sperrmittel für die Ruhestellung und die Betätigungsstellung vorgesehen sein.

In einer bevorzugten Gestaltung ist die Handhabe des Fahrzeugtürgriffes entlang ihrer Längserstreckung mit einem mittleren hintergreifbaren Abschnitt und beidseitig davon jeweils mit Verbindungsansätzen ausgebildet, also in Gestalt eines Bügels, wobei die Handhabe beidseitig des mittleren hintergreifbaren Abschnittes, also mit beiden Bügelenden, über Kopplungsmittel mit dem Griffgehäuse gekoppelt ist und sowohl in der Betätigungsstellung als auch in der Ruhestellung arretierbar ist.

Derartige bügelförmige Handhaben gewährleisten eine stabile Lagerung der Handhabe am Fahrzeug und sind hinsichtlich der Nutzung besonders sicher, da kein Einfädeln um ein freies Ende der Handhabe von beispielsweise Gurten von Taschen oder Kleidungsstücken möglich ist.

In einer bevorzugten Gestaltung sind die Kopplungsmittel des Fahrzeugtürgriffes und der Motor derart ausgebildet, dass die Handhabe in der Ruhestellung und/oder der Betätigungsstellung durch Reibungskräfte und die Bremskraft des Motors lagefest arretiert ist.

Bei einer geeigneten Ausbildung der Kopplungsmittel und des motorischen Antriebes können diese Komponenten bei Wegnahme der Antriebsenergie des Motors, also fehlender Bestromung, ausreichende Arretierkräfte für die Handhabe aufbringen, so dass die Bremskraft des Motors in Kombination mit den Reibungskräften der Kopplungsmittel eine ausreichende Arretierung gewährleistet. Dabei kann auch vorgesehen sein, den Motor mit einer gezielten Bestromung als Bremse wirken zu lassen, indem die magnetischen Felder im Motor statisch gehalten werden.

In einer Weiterbildung der Erfindung ist die Handhabe mit einer Trägerplatte fest verbunden, wobei die Kopplungsmittel an der Trägerplatte angreifen, so dass Trägerplatte und Handhabe zusammen zwischen der Ruhestellung und der Betätigungsstellung bewegbar sind.

Die Trägerplatte kann insbesondere ausgebildet sein, um bei Bewegung der Handhabe in die Betätigungsstellung diejenige Öffnung in der Außenhaut des Fahrzeuges abzuschließen, die in der Ruhestellung von der handhabe selbst abgedeckt wird. Außerdem bietet eine derartige Trägerplatte eine zusätzliche Stabilisierung des gesamten Aufbaus.

In einer weiteren bevorzugten Gestaltung der Erfindung weist der Fahrzeugtürgriff Sensorkomponenten in Gestalt von induktiven Sensoren und/oder kapazitiven Sensoren und/oder mechanischen Schaltern auf.

Kapazitive Sensoren sind bewährte Sensoren im Bereich der Fahrzeugtürgriffe von Fahrzeugen. Sie erlauben eine berührungsfreie Erkennung bereits bei Annäherung eines Benutzers und können daher frühzeitig Bedienvorgänge erkennen. Induktive Sensoren erlauben die Erfassung sehr kleiner Materialverformungen im Bereich der Handhabe, wobei sie Lageänderungen eines Sensors gegenüber benachbarten Metallteilen erfassen. Mechanische Schalter können in Kombination mit solchen Sensoren oder in Alleinstellung genutzt werden. Mechanische Schaltkonzepte für Handhaben sind beispielsweise Mikroschalter, die an der Handhabe mit Schutzabdeckungen aus elastischem Material versehen sind oder Pistolengriffe mit Mikroschaltern oder Schaltwippen im Bereich der Handhabe.

In einer bevorzugten Gestaltung des Fahrzeugtürgriffes sind die Kommunikationsmittel in der Handhabe für ein Nahfeld-Kommunikationsstandard, insbesondere den NFC-Kommunikationsstandard ausgebildet. Da sich Handhaben an Fahrzeugen an exponierten Stellen finden, ist für einen Benutzer die drahtlose Kontaktaufnahme mit Kommunikationseinrichtungen in einer solchen Handhabe besonders intuitiv. Er ist es gewohnt, auf die Handhaben zuzugreifen und nimmt die Handhabe mit der darin angeordneten Nahfeld-Kommunikationseinrichtung als vertrauten Zugriffspunkt an.

In einer besonders bevorzugten Weiterbildung der Erfindung sind an dem Fahrzeugtürgriff außerdem Notentsperrungsmittel vorgesehen, welche bei Kraftausübung auf die Notentsperrungsmittel die Handhabe unabhängig vom Motor aus der Ruhestellung in die Betätigungsstellung bringen.

In Situationen, wo aufgrund von Störungen im Bordnetz ein ordnungsgemäßes Ausfahren der Handhabe aus der Ruhestellung in die Betätigungsstellung nicht geleistet werden kann, erlauben die betätigbaren Notentsperrungsmittel das Ausstellen der Handhabe aus der Ruhestellung in die Betätigungsstellung. Dazu kann beispielsweise neben der Handhabe ein abgedeckter Zugriffsbereich angeordnet sein, der nach Abnahme einer Abdeckung ein seitliches Untergreifen der Handhabe erlaubt. Außerdem kann ein Bowdenzug vorgesehen sein, der mit der Handhabe gekoppelt ist, um bei Zug am Bowdenzug die Ausstellung der Handhabe zu bewirken. Dabei muss der Betätigungspunkt der Notentriegelung keineswegs benachbart zu dem Fahrzeugtürgriff angeordnet sein, sondern kann auch an anderer Stelle des Fahrzeuges, beispielsweise im Heckbereich oder unterhalb des Fahrzeuges angeordnet sein.

Die Erfindung wird nun unter Bezug auf die beiliegenden Zeichnungen näher erläutert.
Figur 1 zeigt schematisch die Platzierung erfindungsgemäßer Fahrzeugtürgriffe an einem Fahrzeug;
Figur 2a zeigt in einer Prinzipdarstellung einen erfindungsgemäßen Fahrzeugtürgriff mit einer Handhabe in Ruhestellung;
Figur 2b zeigt den Fahrzeugtürgriff aus Figur 2a mit der Handhabe in Betätigungsstellung;
Figur 3a zeigt den Fahrzeugtürgriff aus Figur 2a in einer teildurchsichtigen Darstellung;
Figur 3b zeigt den Fahrzeugtürgriff aus Figur 3b in einer teildurchsichtigen Darstellung;
Figur 4 zeigt die Anordnung eines erfindungsgemäßen Fahrzeugtürgriffes neben dem Schließzylinder eines Kraftfahrzeuges;
Figur 5a zeigt eine Ausführungsform der Erfindung in einer perspektivischen Frontansicht;
Figur 5b zeigt die Anordnung aus Figur 5a, wobei die nach außen gerichtete Deckseite der Handhabe abgenommen ist;
Figur 5c zeigt die Anordnung aus den Figuren 5a und 5b in einer perspektiven Rückansicht;
Figur 6a zeigt wesentliche Komponenten der Ausführungsformen bei entferntem Gehäuse;
Figur 6b zeigt die Anordnung aus Figur 6a in einer perspektivischen Frontansicht;
Figur 6c zeigt die Anordnung aus den Figuren 6a und 6b in einer Aufsicht;
Figur 7a zeigt in Gestalt einer Prinzipskizze die Anordnung von Kommunikationsmittel in der Handhabe;
Figur 7b zeigt in einer Prinzipskizze die Anordnung von einem ersten mechanischen Schalter in einer Handhabe;
Figur 7c zeigt in einer Prinzipskizze die Gestaltung der Handhabe eines erfindungsgemäßen Fahrzeugtürgriffes mit Pistolengriffbetätigung.

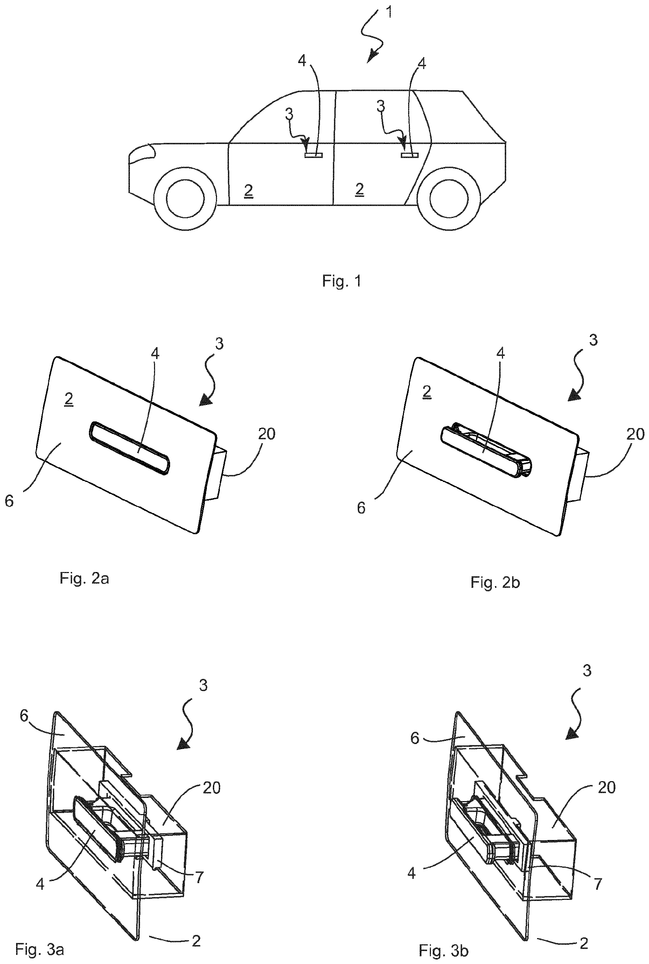

Figur 1 zeigt ein Fahrzeug 1 mit Türen 2, an denen Fahrzeugtürgriffe 3 angeordnet sind. Diese Fahrzeugtürgriffe 3 sind jeweils mit Handhaben 4 ausgestattet, welche durch entspreche Ausnehmungen in den Außenhäuten der Türen 2 geführt sind.

In Figur 2a ist ein Ausschnitt der Türen 2 gezeigt, in welchem der Fahrzeugtürgriff 3 angeordnet ist. Das Türblech 6 bildet die Außenhaut der Türe 2 und die Handhabe 4 befindet sich in der Abbildung 2a in Ruhestellung. In dieser Ruhestellung ist die Oberfläche der Handhabe 4 strakbündig mit dem umgebenden Türblech 6 ausgebildet. Auf der Rückseite des Türblechs 6, also auf der Innenseite der Tür, ist ein Gehäuse 8 angeordnet, welches an dem Türblech 6 festgelegt ist und Kopplungsmittel sowie einen Motor zum Antrieb der Handhabe 4 aufnimmt.

In Figur 2b ist die Anordnung aus Figur 2a gezeigt, wobei sich hier die Handhabe 4 in der Betätigungsstellung, also gegenüber dem Türblech 6 in einer ausgestellten Position befindet. Die Handhabe 4 ist als Griffbügel ausgebildet, also mit einem mittleren, hintergreifbaren Abschnitt und beidseitig davon angeordneten Bügelendstücken, so dass ein Benutzer die Handhabe hintergreifen kann. Bei einer derartigen beidseitigen Verbindung des mittleren angreifbaren Abschnitts der Handhabe ist die Gefahr eines Einfädelns hinter freien Enden der Handhabe gegenüber einseitig freitragenden angreifbaren Abschnitten reduziert.

Figur 3a zeigt die Anordnung aus Figur 2a in einer teildurchsichtigen Darstellung. Die Handhabe 4 befindet sich wiederum in der Ruhestellung, also in einer Stellung, in welcher die nach außen gewandte Deckseite der Handhabe mit den umgebenden Türblech 6 fluchtet. Die Handhabe 4 ist, wie in dieser Darstellung ersichtlich, auf einer Trägerplatte 7 angeordnet, welche als Montageplatte für die Handhabe 4 dient und die Bewegung der Handhabe 4 aus der Ruhestellung in die Betätigungsstellung mitvollzieht. An der Trägerplatte 7 sind Kopplungsmittel (hier nicht gezeigt) angeordnet, welche die Trägerplatte mit einem motorischen Antrieb (hier nicht gezeigt) koppeln, um die Trägerplatte 7 aus der Ruhestellung (in Figur 3a) in die Betätigungsstellung (in Figur 3b) zu überführen.

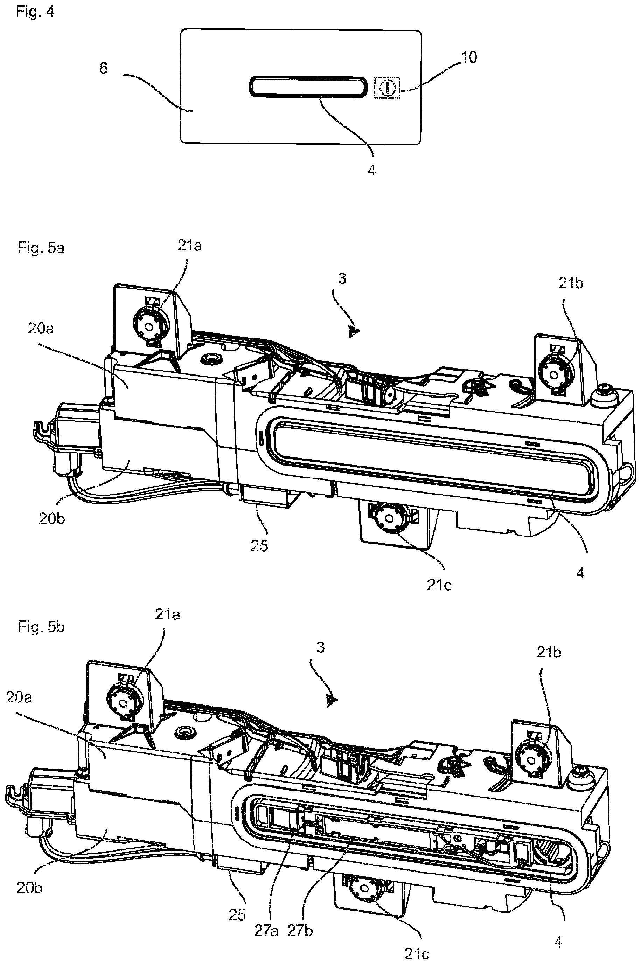

Wie in Figur 4 dargestellt, können zusätzlich zu der Handhabe 4 auch weitere Funktionskomponenten in der Umgebung des Fahrzeugtürgriffes angeordnet sein, z.B. ein Schließzylinder 10. Dieser kann in demselben Gehäuse untergebracht sein, welches die Kopplungsmittel und den Motor für die Handhabe 4 aufnimmt, der Schließzylinder 10 ist jedoch beabstandet von der verfahrbaren Handhabe selbst ausgebildet, so dass keine aufwendigen mechanischen Wirkungsketten durch die Handhabe 4 geführt werden.

Figur 5a zeigt eine konkretere Ausführungsform eines erfindungsgemäßen Fahrzeugtürgriffes in einer ersten Darstellung. Hier ist das Gehäuse 20a, 20b mit einem Gehäuseoberteil 20a und einem Gehäuseunterteil 20b ausgebildet. Montagepunkte 21a, 21b und 21c sind vorgesehen, um das Gehäuse 20a, 20b an einer Innenseite der Fahrzeugtür festzulegen. Eine Handhabe 4 ist in ihrer Ruhestellung, zurückgezogen im Gehäuse 20a, 20b dargestellt. Eine mit dem Fahrzeug-Steuersystem koppelbare drahtgebundene Schnittstelle 25 leitet Steuersignale an den Fahrzeugtürgriff weiter und leitet erfasste Sensorsignale und Kommunikationssignale über die Schnittstelle an das Fahrzeugsystem.

Die Handhabe, deren Abdeckung in Figur 5b entfernt ist, enthält Sensorkomponenten 27a, die auf einer in der Handhabe befindlichen Platine angeordnet sind. Zusätzlich sind auf der Platine Kommunikationsmittel 27b für eine Nahfeldkommunikation angeordnet sein. Die Sensorkomponenten 27a und die Kommunikationsmittel 27b sind in der Handhabe 4 so aufgenommen, dass sie zusammen mit der Handhabe verstellt werden, also aus der Ruhestellung in die Betätigungsstellung bewegt werden.

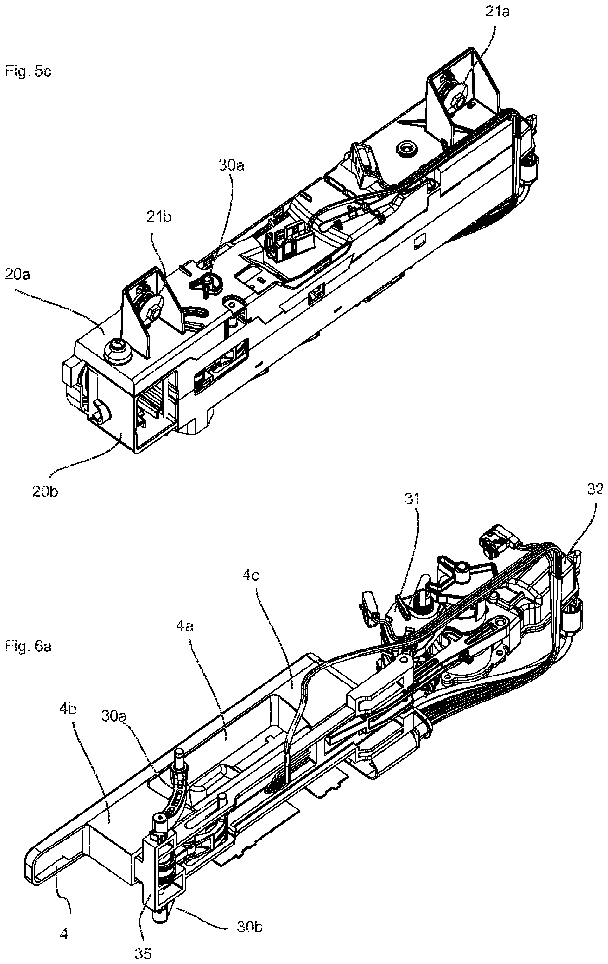

Figur 5c zeigt die Ausführungsform des Fahrzeugtürgriffs in einer Schrägansicht von hinten. Wiederum sind die beiden Gehäuseteile 20a und 20b des Gehäuses dargestellt sowie die Montagepunkte 21a und 21b.

In Figur 6a sind aus demselben Blickwinkel wie in Figur 5c wesentliche Komponenten des Fahrzeugtürgriffs gezeigt, wobei jedoch die Gehäuseteile 20a und 20b ausgeblendet sind, um Sicht auf die inneren Bestandteile des Fahrzeugtürgriff zu erlauben. Die Handhabe 4 ist mit einer Trägerplatte 35 fest verbunden. Die Trägerplatte 35 ist über Kopplungsmittel 30a, 30b, 31 mit einem motorischen Antrieb 32 gekoppelt. Durch Antrieb des Motors 32 können die Kopplungsmittel 30a, 30b, 31 derart verstellt werden, dass die Handhabe 4 mitsamt der Trägerplatte 35 aus der Ruhestellung in die Betätigungsstellung gebracht wird. Dafür sind die Kopplungsmittel 30a, 30b, 31, wie in Figur 5c gezeigt, zum Verschwenken der Handhabe mit Ausnehmung im Gehäuse gekoppelt, so dass eine Verstellung der Handhabe 4 gegenüber dem Gehäuse 20a, 20b erfolgt. Die Kopplungsmittel 30a, 30b, 31 weisen dazu auf einer Seite der Handhabe 4 Hebelarme 30a und 30b auf, die mit dem Gehäuse 20a, 20b gekoppelt sind. Auf der anderen längsseitigen Endseite der Handhabe ist die Trägerplatte 35 mit einem antreibbaren Hebelarm 31 gekoppelt. Durch die Krafteinleitung des Motors 32 in dem Hebelarm 31 und eine Verschwenkung des Hebelarms 31 wird die Handhabe 4 aus ihrer Ruhestellung in die Betätigungsstellung ausgefahren, wobei die Hebelarme 30a, 30b durch mechanische Kopplung mitgeführt werden und den Bewegungsweg der Handhabe 4 vorgeben. Unter Anlenkung mit den Kopplungsmitteln fährt die Handhabe 4 aus ihrer Ruhestellung in die ausgefahrene Stellung aus, wobei die Hebelarme 30a, 30b in ihren jeweiligen Lagern im Gehäuse geschwenkt werden während der Hebelarm 31 die Krafteinleitung von dem Motor 22 in eine Schwenkbewegung überführt.

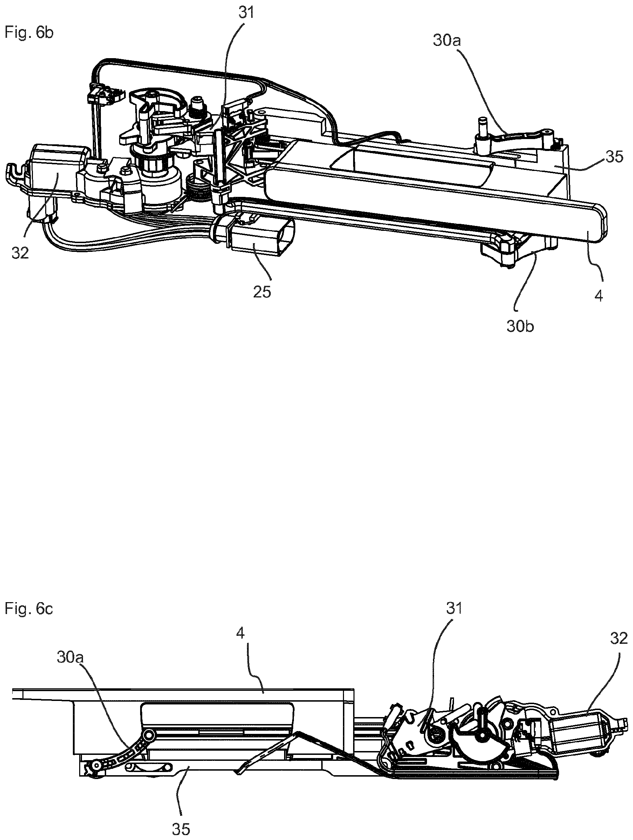

Figur 6b zeigt die Anordnung aus Figur 6a in einer Ansicht von vorn. In dieser Darstellung sind die Kopplungsmittel, welche die Hebelarme 30a und 30b sowie 31 enthalten, deutlicher zu erkennen.

In Figur 6c ist dieselbe Anordnung wie in den Figuren 6a und 6b dargestellt, jedoch in einer Ansicht von oben.

In sämtlichen der Figuren 6a, 6b und 6c wird deutlich, dass die Kopplungsmittel 30a, 30b und 31 an der Trägerplatte 35 angreifen, wobei diese fest mit der Handhabe 4 verbunden oder einstückig mit dieser ausgebildet ist.

Diese Darstellungen zeigen auch, dass der mechanische konstruktive Aufwand bei diesem erfindungsgemäßen Fahrzeugtürgriff deutlich geringer ist als bei vergleichbaren, versenkbaren Fahrzeugtürgriffen, da keine Stellwege für eine Betätigung durch einen Benutzer vorzusehen sind. Weder in der Ruhestellung der Handhabe 4 noch in der Betätigungsstellung der Handhabe 4 ist vorgesehen, diese irgendwie gegenüber dem Gehäuse zu verschwenken oder translatorisch für eine Betätigung auszulenken. Lediglich die Verstellung aus der Ruhestellung in die Betätigungsstellung wird durch die mechanischen Komponenten gewährleistet, die eine äußerst einfache konstruktive Gestaltung erlauben. Im Übrigen sind sämtliche Betätigungssignale durch die elektronischen Komponenten in der Handhabe 4 aufzunehmen und an ein fahrzeugseitiges Steuersystem über die Schnittstelle 25 auszugeben.

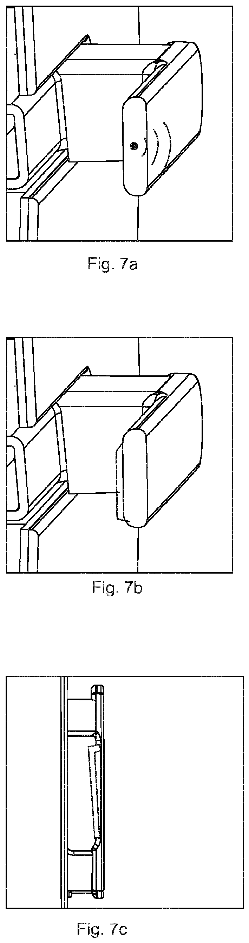

Die Figuren 7a, 7b und 7c zeigen unterschiedliche Gestaltungen einer Handhabe mit darin aufgenommenen elektronischen Komponenten.

In Figur 7a ist eine Schnittansicht einer Handhabe gezeigt, um die Lage einer Nahfeldkommunikationseinrichtung in der Handhabe zu visualisieren. Eine NFC-Kommunikationseinrichtung erlaubt die Ausführung einer Kommunikation zwischen dieser Einrichtung und einem mobilen Kommunikationsgerät, beispielsweise einem Smartphone eines Benutzers. Dieser kann damit Steuersignale an das Fahrzeug übermitteln, beispielsweise Benutzungshandlungen wie eine Entriegelung des Fahrzeugs oder eine Verriegelung des Fahrzeuges auslösen.

Figur 7b zeigt eine Schnittansicht einer Handhabe mit einer zum Fahrzeug zugewandten Bedienfläche auf der Innenseite der Handhabe, die als mechanische Schaltwippe ausgeführt ist. Eine solche Wippe überträgt eine händische Betätigung auf einem Mikroschalter und generiert entsprechende Schaltsignale, ohne dass die Handhabe hierbei gegenüber ihrer Betätigungsstellung bewegt wird, lediglich die Schalterkomponenten werden gegenüber der Handhabe verstellt.

Figur 7c zeigt eine weitere alternative Gestaltung einer erfindungsgemäßen Handhabe, bei der die Handhabe in ihrem mittleren, betätigbaren Abschnitt mit einem Pistolengriff ausgestattet ist, der ebenfalls mit einem Mikroschalter oder auch einem anderen Schaltaufnehmer gekoppelt ist. Auch hier ist die Handhabe in ihrer Betätigungsstellung feststehend, die Schaltkomponenten werden mitsamt der Handhabe in das Fahrzeuginnere gezogen, sofern die Handhabe von der Bestätigungsstellung in die Ruhestellung übergeht.

## Patentansprüche

1. Fahrzeugtürgriff (3) mit einer Handhabe (4) zur sensorgesteuerten Auslösung einer Fahrzeugfunktion,
wobei die Handhabe (4) mit einem an einem Fahrzeug montierbaren Griffgehäuse (20, 20a, 20b) gekoppelt ist,
wobei Kopplungsmittel (30a, 30b, 31) und ein Motor (32) vorgesehen sind, wobei der Motor (32) an dem Griffgehäuse (20, 20a, 20b) oder an dem Fahrzeug angeordnet ist und wobei die Kopplungsmittel (30a, 30b, 31) derart die Handhabe (4) und den Motor (32) koppeln, dass die Handhabe (4) unter Antrieb des Motors (32) gegenüber dem Griffgehäuse (20a, 20b) zwischen einer Ruhestellung und einer ausgestellten Betätigungsstellung verfahrbar ist,
wobei der Fahrzeugtürgriff (3) zur Montage in einer Karosserieausnehmung eines Fahrzeuges derart ausgebildet ist, dass eine Deckfläche der Handhabe (4) in der Ruhestellung strakbündig mit einer Deckfläche eines angrenzenden Karosserieabschnitts ist,
wobei die Handhabe
- Sensorkomponenten (27a) aufweist, die eine auf die Handhabe einwirkende Betätigungskraft erfassen und abgeleitete Betätigungssignale bereitstellt,
und/oder
- Kommunikationsmittel (27b) aufweist, welche ein an die Handhabe angenähertes mobiles Kommunikationsgerät erfassen und aus einer zwischen Kommunikationsmittel und Kommunikationsgerät etablierten Kommunikation abgeleitete Betätigungssignale bereitstellen,
wobei die Sensorkomponenten (27a) und/oder die Kommunikationsmittel (27b) mit einer dem Griffgehäuse (20a, 20b) zugeordneten kabelgebundenen Schnittstelle gekoppelt sind, über welche die Betätigungssignale an ein fahrzeugseitiges Steuersystem ausgebbar sind,
wobei die Handhabe (4) sowohl in der Betätigungsstellung als auch in der Ruhestellung über ihre gesamte Erstreckung lagefest und stellwegfrei mit dem Griffgehäuse (20, 20a, 20b) gekoppelt und gegenüber Auslenkung bezüglich des Griffgehäuses (20, 20a, 20b) arretiert ist,
**dadurch gekennzeichnet,**
**dass** ansteuerbare Sperrmittel vorgesehen sind, welche die Handhabe in der Ruhestellung und/oder der Betätigungsstellung verriegeln und lagefest halten.

2. Fahrzeugtürgriff nach Anspruch 1, wobei die Handhabe entlang ihrer Längserstreckung einen mittleren hintergreifbaren Abschnitt (4a) und beidseitig davon jeweils einen Verbindungsansatz (4b, 4c) aufweist, mit welchen die Kopplungsmittel verbunden sind, so dass die Handhabe beidseitig des mittleren hintergreifbaren Abschnitts (4a) über die Kopplungsmittel mit dem Griffgehäuse (20, 20a, 20b) gekoppelt und sowohl in der Betätigungsstellung als auch in der Ruhestellung arretierbar ist.

3. Fahrzeugtürgriff nach einem der vorangehenden Ansprüche, wobei die Kopplungsmittel und der Motor derart ausgebildet sind, dass die Handhabe in der Ruhestellung und/oder der Betätigungsstellung durch Reibungskräfte und die Bremskraft des Motors lagefest gehalten ist.

4. Fahrzeugtürgriff nach einem der vorangehenden Ansprüche, wobei die Handhabe (4) mit einer Trägerplatte (35) fest verbunden ist und die Kopplungsmittel (30a, 30b, 31) an der Trägerplatte (35) angreifen, so dass die Trägerplatte zusammen mit der Handhabe (4) zwischen der Ruhestellung und der Betätigungsstellung bewegbar sind.

5. Fahrzeugtürgriff nach einem der vorangehenden Ansprüche, wobei die Sensorkomponenten einen induktiven Sensor und/oder einen kapazitiven Sensor und/oder einen mechanischen Schalter aufweisen.

6. Fahrzeugtürgriff nach einem der vorangehenden Ansprüche, wobei die Kommunikationsmittel für eine NahfeldKommunikation, insbesondere eine Kommunikation nach dem NFC-Standard, ausgebildet sind.

7. Fahrzeugtürgriff nach einem der vorangehenden Ansprüche, wobei die Kopplungsmittel mit betätigbaren Notensperrungsmitteln gekoppelt sind, welche bei Kraftausübung auf die Notensperrungsmittel die Handhabe unabhängig vom Motor aus der Ruhestellung in die Betätigungsstellung bringen.

## Claims

1. Vehicle door handle (3) with a handle (4) for sensor-controlled activation of a vehicle function,
wherein the handle (4) is coupled to a handle housing (20, 20a, 20b) which can be mounted on a vehicle,
wherein coupling means (30a, 30b, 31) and a motor (32) are provided, wherein the motor (32) is arranged on the handle housing (20, 20a, 20b) or on the vehicle and wherein the coupling means (30a, 30b, 31) couple the handle (4) and the motor (32) in such a way that the handle (4) is movable relative to the handle housing (20a, 20b) between a rest position and an extended actuation position under the drive of the motor (32),
wherein the vehicle door handle (3) is designed for mounting in a body recess of a vehicle such that a cover surface of the handle (4) is flush with a cover surface of an adjacent body section in the rest position,
wherein the handle comprises
- sensor components (27a) which detect an actuating force acting on the handle and provide derived actuating signals,
and/or
- communication means (27b) which detect a mobile communication device approaching the handle and provide actuation signals derived from a communication established between the communication means and the communication device,
wherein the sensor components (27a) and/or the communication means (27b) are coupled to a wired interface associated with the handle housing (20a, 20b), via which the actuation signals can be output to a control system on the vehicle,
wherein the handle (4) is coupled to the handle housing (20, 20a, 20b) both in the actuating position and in the rest position over its entire extension in a positionally fixed manner and free of travel and is locked against deflection with respect to the handle housing (20, 20a, 20b),
**characterized in**
**that** controllable blocking means are provided which lock the handle in the rest position and/or the actuating position and hold it in a fixed position.

2. Vehicle door handle according to claim 1, wherein the handle has along its longitudinal extent a central section (4a) which can be gripped behind and on both sides thereof in each case a connecting projection (4b, 4c), to which the coupling means are connected, so that the handle is coupled on both sides of the central section (4a) which can be gripped behind to the handle housing (20, 20a, 20b) via the coupling means and can be locked both in the actuating position and in the rest position.

3. Vehicle door handle according to any of the preceding claims, wherein the coupling means and the motor are designed in such a way that the handle is held in a fixed position in the rest position and/or the actuating position by frictional forces and the braking force of the motor.

4. Vehicle door handle according to any of the preceding claims, wherein the handle (4) is firmly connected to a carrier plate (35) and the coupling means (30a, 30b, 31) engage on the carrier plate (35) so that the carrier plate together with the handle (4) can be moved between the rest position and the actuating position.

5. Vehicle door handle according to any one of the preceding claims, wherein the sensor components comprise an inductive sensor and/or a capacitive sensor and/or a mechanical switch.

6. Vehicle door handle according to any of the preceding claims, wherein the communication means are designed for near-field communication, in particular communication according to the NFC standard.

7. Vehicle door handle according to any of the preceding claims, wherein the coupling means are coupled to actuatable note locking means which, when force is exerted on the note locking means, bring the handle from the rest position into the actuated position independently of the engine.

## Revendications

1. Poignée de porte de véhicule (3) avec une manette (4) pour le déclenchement d'une fonction du véhicule commandé par un capteur,
dans laquelle la poignée (4) est couplée à un boîtier de poignée (20, 20a, 20b) pouvant être monté sur un véhicule,
dans laquelle des moyens d'accouplement (30a, 30b, 31) et un moteur (32) sont prévus, dans laquelle le moteur (32) est disposé sur le boîtier de poignée (20, 20a, 20b) ou sur le véhicule et dans laquelle les moyens d'accouplement (30a, 30b, 31) accouplent la poignée (4) et le moteur (32) de telle sorte que la poignée (4) peut être déplacée par rapport au boîtier de poignée (20a, 20b) entre une position de repos et une position d'actionnement déployée sous l'entraînement du moteur (32),
la poignée de porte de véhicule (3) étant conçue pour être montée dans un évidement de la carrosserie d'un véhicule de telle sorte qu'une surface de recouvrement de la poignée (4) soit, en position de repos, à fleur d'une surface de recouvrement d'une section de carrosserie adjacente,
où la manette
- comprends des composants de capteur (27a) qui détectent une force d'actionnement agissant sur la poignée et qui fournissent des signaux d'actionnement dérivés,
et/ou
- des moyens de communication (27b) qui détectent un appareil de communication mobile approché de la poignée et fournissent des signaux d'actionnement dérivés d'une communication établie entre les moyens de communication et l'appareil de communication,
les composants de capteur (27a) et/ou les moyens de communication (27b) étant couplés à une interface câblée associée au boîtier de poignée (20a, 20b), par laquelle les signaux d'actionnement peuvent être émis vers un système de commande côté véhicule,
la poignée (4) étant couplée sur toute son étendue au boîtier de poignée (20, 20a, 20b) de manière fixe et sans course de réglage aussi bien dans la position d'actionnement que dans la position de repos, et étant bloquée par rapport à une déviation par rapport au boîtier de poignée (20, 20a, 20b),
**caractérisé**
**en ce qu'**il est prévu des moyens de blocage commandables qui verrouillent la manette dans la position de repos et/ou dans la position d'actionnement et la maintiennent dans une position fixe.

2. Poignée de porte de véhicule selon la revendication 1, dans laquelle la poignée présente, le long de son extension longitudinale, une section centrale pouvant être saisie par l'arrière (4a) et, de part et d'autre de celle-ci, respectivement un appendice de liaison (4b, 4c) auquel sont reliés les moyens d'accouplement, de sorte que la poignée est couplée au boîtier de poignée (20, 20a, 20b), de part et d'autre de la section centrale pouvant être saisie par l'arrière (4a), par l'intermédiaire des moyens d'accouplement, et peut être bloquée aussi bien dans la position d'actionnement que dans la position de repos.

3. Poignée de porte de véhicule selon l'une quelconque des revendications précédentes, dans laquelle les moyens de couplage et le moteur sont configurés de telle sorte que la poignée est maintenue en position fixe dans la position de repos et/ou la position d'actionnement par des forces de frottement et la force de freinage du moteur.

4. Poignée de porte de véhicule selon l'une quelconque des revendications précédentes, dans laquelle la poignée (4) est solidaire d'une plaque de support (35) et les moyens d'accouplement (30a, 30b, 31) s'engagent sur la plaque de support (35) de sorte que la plaque de support est mobile avec la poignée (4) entre la position de repos et la position d'actionnement .

5. Poignée de porte de véhicule selon l'une quelconque des revendications précédentes, dans laquelle les composants de détection comprennent un capteur inductif et/ou un capteur capacitif et/ou un commutateur mécanique.

6. Poignée de porte de véhicule selon l'une quelconque des revendications précédentes, dans laquelle les moyens de communication sont conçus pour une communication en champ proche, en particulier une communication selon la norme NFC.

7. Poignée de porte de véhicule selon l'une quelconque des revendications précédentes, dans laquelle les moyens de couplage sont couplés à des moyens de blocage de note actionnables qui, lorsqu'une force est exercée sur les moyens de blocage de note, font passer la poignée de la position de repos à la position d'actionnement indépendamment du moteur.
